# EUROPEAN PATENT APPLICATION

(11) **EP 4 560 728 A1**
(43) Date of publication of application: **28.05.2025**
(21) Application number: 24215181.9
(22) Date of filing: 25.11.2024
(51) Int. Cl.: H01M 4/36, H01M 4/505, H01M 4/525, H01M 4/58, H01M 4/62, H01M 10/052, H01M 4/02

(54) **POSITIVE ELECTRODE COMPOSITE MATERIAL AND PREPARATION METHOD AND APPLICATION THEREOF**

(30) Priority: 23.11.2023 CN 202311581318; 04.01.2024 WO PCT/CN2024/070572
(71) Applicant: Eve Power Co., Ltd., Jingmen, Hubei 448000 (CN)
(72) Inventor: YI, Jingyu, 448000 Jingmen, Hubei (CN); HUANG, Xin, 448000 Jingmen, Hubei (CN); ZHU, Weihua, 448000 Jingmen, Hubei (CN); WEI, Haitao, 448000 Jingmen, Hubei (CN)
(74) Representative: Berggren Oy

(57) **Abstract**

Disclosed herein are a positive electrode composite material and a preparation method and application thereof. The positive electrode composite material includes a nano lithium manganese iron phosphate material, a first cladding layer coated on a surface of the nano lithium manganese iron phosphate material, and a second cladding layer coated on a surface of the first cladding layer. The first cladding layer includes a nano ternary active material and the second cladding layer is a carbon cladding layer. The disclosure has an advantage of improving conductivity and structural stability of the lithium manganese iron phosphate material.

## Description

### TECHNICAL FIELD

The present application relates to a technical field of lithium batteries, and in particular to a positive electrode composite material and a preparation method and application thereof.

### BACKGROUND

In recent years, with the rapid development of new energy technologies, the research and development of power batteries has been in full swing, and the research and development of power batteries is gradually focused on the development of high-energy-density battery materials. Although ternary materials have excellent high specific capacity, there are certain concerns about the safety of ternary lithium batteries. However, although the material represented by lithium iron phosphate is structurally stable and the lithium iron phosphate battery has better safety, the lower specific energy of the material leads to a shorter driving range of the passenger vehicle using the lithium iron phosphate batteries, which cannot meet the travel requirements of people. Therefore, there is an urgent need to find a new type of lithium battery material which can take into account both high energy density and safety.

Both lithium manganese iron phosphate and lithium iron phosphate are of an olivine-type structure, and have excellent thermodynamic stability, so that the lithium manganese iron phosphate battery has a safety similar to that of the lithium iron phosphate battery, and the lithium manganese iron phosphate battery has an energy density similar to that of the ternary lithium battery. Therefore, the lithium manganese iron phosphate can be used as a material for the development of lithium batteries with both high energy density and high safety performance.

However, it should be noted that, compared with a transition energy gap of 0.3 eV in the lithium iron phosphate, the energy gap of electron transition in the lithium manganese iron phosphate is as high as 2 eV, and thus the lithium manganese iron phosphate is basically an insulator and has the disadvantages of low electron conductivity and low ion mobility. Moreover, the dissolution of the manganese element of the lithium manganese iron phosphate may appear during the cycle of the battery, resulting in a decrease in the structural stability of the lithium manganese iron phosphate, which directly limits the development and application of the lithium manganese iron phosphate battery.

### SUMMARY

In order to improve the electrical conductivity and structural stability of the lithium manganese iron phosphate material, the present application provides a positive electrode composite material and a preparation method and application thereof.

### Technical scheme

In a first aspect, the present disclosure provides a positive electrode composite material including a nano lithium manganese iron phosphate material, a first cladding layer coated on a surface of the nano lithium manganese iron phosphate material, and a second cladding layer coated on a surface of the first cladding layer;
the first cladding layer includes a nano ternary active material and the second cladding layer is a carbon cladding layer.

In a second aspect, the present disclosure provides a method of preparing a positive electrode composite material.

The method of preparing the positive electrode composite material including following steps.

In Step 1, an iron source, a first manganese source, and a first lithium source are added to a first aqueous solvent in a stirring state to form a first mixture, then a phosphorus source is added to the first mixture, after stirring and dissolving, a hydrothermal reaction is performed to obtain a nano lithium manganese iron phosphate material.

In Step 2, a nickel source, a second manganese source, a cobalt source, a second lithium source, and an ammonium salt are mixed with a second aqueous solvent, a second mixture is formed after stirring and dissolving, the nano lithium manganese iron phosphate material is mixed with the second mixture, an annealing process is performed after a hydrothermal reaction of the second mixture to form a first cladding layer on a surface of the nano lithium manganese iron phosphate material.

In Step 3, the nano lithium manganese iron phosphate material on the surface of which the first cladding layer are formed obtained in Step 2 is mixed with an organic carbon source solution, the nano lithium manganese iron phosphate material is taken out, an annealing treatment is performed after a drying treatment to obtain the positive electrode composite material.

In a third aspect, the present disclosure provides a positive electrode plate including a positive current collector and a positive electrode material layer disposed on a surface of the positive current collector, the positive electrode material layer includes a conductive agent, a binder, and the positive electrode composite material as described above.

In a fourth aspect, the present disclosure provides a lithium ion battery including a positive electrode plate as described above.

### Beneficial effect

1. By nanocrystallizing the lithium manganese iron phosphate material, it is possible to provide more electrochemical reaction regions and shorter ion transport paths, improve the specific capacity of the material, reduce the degree of damage of the structure during charging and discharging so as to reduce the degree of attenuation of the specific capacity, overcome the problem of poor conductivity of the pure lithium manganese iron phosphate material, and improve the rate performance of the material.
2. It is possible to improve a degree of bonding of the lithium manganese iron phosphate material with the nano ternary active material during the coating process, and obtain a first cladding layer with excellent coating effect, so that the ternary active material forming the first cladding layer has a more complete layered structure, and the more complete the layered structure, the better the stability of the first cladding layer is, so as to improve cycle performance and safety performance of the positive electrode composite material.
3. The presence of the first cladding layer can increase the content of the deintercalable lithium ions in the positive electrode material and further increase the specific capacity of the positive electrode composite material, and the nano ternary active material in the first cladding layer and the lithium manganese iron phosphate material may complement each other in terms of performance and have a synergistic effect, thereby further improving the conductivity and the structural stability of the lithium manganese iron phosphate material.
4. A carbon material is introduced into the nano ternary active material of the first cladding layer to form a second cladding layer, so that the carbon material has good conductivity and stability, which is conducive to reducing the internal resistance, improving the charge transport capacity, and further improving the rate performance and the cycle stability of the lithium manganese iron phosphate material.
5. The presence of the second cladding layer and the first cladding layer can also effectively prevent the lithium manganese iron phosphate material from coming into direct contact with the electrolyte solution during the battery cycle, and avoid manganese dissolution of the lithium manganese iron phosphate material, so that the positive electrode composite material has high structural stability, thereby improving the cycle performance thereof.

### BRIEF DESCRIPTION OF THE DRAWINGS

FIG. 1 is a direct current internal resistance (DCIR) data diagram of a lithium batteries according to Example 1 and Comparative Examples 1 to 3.
FIG. 2 is a discharging test diagram of lithium batteries corresponding to Example 1 and Comparative Examples 1 to 3 at 25°C under 5C rate.

### DETAILED DESCRIPTION

Unless otherwise indicated, all numbers used in the specification and claims to indicate quantities of components, reaction conditions, and the like are to be understood as being modified by the term "about. Thus, unless indicated to the contrary, the numerical parameters set forth herein are approximations that can vary depending on the desired properties that are obtained.

As used herein, the term "and/or" refers to one or all of the elements mentioned.

As used herein, the terms "comprise/comprising" and "include/including" cover a situation where only the elements mentioned are included and a situation where there are other elements that are not mentioned in addition to the elements mentioned.

All percentages used herein are percentages by weight, unless otherwise indicated.

As used in this specification, "a," "an," and "the" are intended to include "at least one" or "one or more" unless otherwise indicated. For example, "a component" refers to one or more components, and therefore more than one component may be contemplated and may be employed or used in the practice of the embodiments.

In an embodiment, a positive electrode composite material includes a nano lithium manganese iron phosphate material, a first cladding layer coated on a surface of the nano lithium manganese iron phosphate material, and a second cladding layer coated on a surface of the first cladding layer. Thickness of the first cladding layer ranges from 1/20 to 1/10 of a particle size D50 of the nano lithium manganese iron phosphate material. The term "D50" refers to a particle size corresponding to when a volume distribution percentage of a cumulative particle size of a sample reaches 50%. Its physical meaning is that 50% of the particles are larger than it, and 50% of the particles are smaller than it. D50 is also called the median diameter or median diameter.

In an embodiment, thickness of the second cladding layer ranges from 1/800 to 1/500 of the particle size D50 of the nano lithium manganese iron phosphate material.

By adjusting the thicknesses of the first cladding layer and the second cladding layer, the carbon cladding layer, the phase separation at the two-phase interfaces between the carbon cladding layer, the first cladding layer and the lithium manganese iron phosphate material will not occur while effectively cladding the nano lithium manganese iron phosphate material. The thickness enables the positive electrode composite material to have better structural stability, higher ionic conductivity, and higher electron conductivity, thereby improving the conductivity of the positive electrode composite material.

In an embodiment, the nano lithium manganese iron phosphate material has a particle size D50 of 600-1200 nm.

By controlling the particle size of the nano lithium manganese iron phosphate material, the thickness of the first cladding layer and the second cladding layer can be controlled within a reasonable range, so that the particle size of the final prepared positive electrode composite material is not too small or too large, and thus it has higher structural stability.

In an embodiment, the nano-ternary active material is a high nickel nano-ternary active material, a mole fraction of nickel in the high nickel nano-ternary active material ranges from 0.8 to 0.9.

By controlling the mole fraction of nickel in the high-nickel nano-ternary active material, the specific capacity of the positive electrode plate using the positive electrode composite material is increased, and the energy density of the lithium manganese iron phosphate battery is increased.

In an embodiment, the carbon cladding layer includes a carbon material selected from an organic carbon source, the organic carbon source is selected from at least one of glucose, sucrose, soluble starch, citric acid, β-cyclodextrin, or polyvinyl alcohol.

The positive electrode composite material has a specific surface area of 20-25 m²/g.

By controlling the specific surface area of the positive electrode composite material, the positive electrode composite material can have a better bonding property with the material such as a binder, a conductive agent, and the like, in the positive electrode plate, which is favorable for obtaining excellent conductive performance and cycling performance of the lithium battery.

In an embodiment, in a step one of a method of preparing the positive electrode composite material, a mass ratio of an iron source, a first manganese source, a first lithium source, and a phosphorus source is 25-29:16-18:6-10:10-15; and in the step one, a temperature for a hydrothermal synthesis ranges from 85°C to 95°C, and time for the hydrothermal reaction ranges from 220 min to 260 min.

In an embodiment, in the step one, the iron source includes at least one of FeSO₄, FeCl₂, FeC₂O₄.2H₂O, Fe(OH)₃, or Fe(NO₃)₃; the first manganese source includes at least one of MnSO₄, MnCO₃, or MnCl₂; the first lithium source includes at least one of Li₂CO₃, LiOH, or LiCl; the phosphorus source includes at least one of H₃PO₄, H₃PO₃, or LiH₂PO₄, the phosphoric acid refers to an aqueous solution of phosphoric acid with a mass concentration of 60%-85%; and the first aqueous solvent is water or an aqueous solution containing an ion or an organic solvent.

In an embodiment, in a step two, the mass ratio of the nickel source, the second manganese source, the cobalt source, the second lithium source, and the ammonium salt is 450-650:20-60:40-100:150-260:20-50; in step two, the temperature for the hydrothermal synthesis ranges from 110°C to 130°C, and the time for the hydrothermal reaction ranges from 340 min to 380 min; and in the step two, a temperature for an annealing treatment ranges from 500°C to 600°C, and annealing time ranges from 10 h to 14 h.

In an embodiment, in step two, the nickel source includes at least one of NiSO₄, Ni(OH)₂, or Ni(NO₃)₂; the second manganese source includes at least one of MnSO₄, MnCO₃, or MnCl₂; the cobalt source includes at least one of Co(NO₃)₂, CoSO₄, or CoCl₂; the second lithium source includes at least one of Li₂CO₃, LiOH, or LiCl; the ammonium salt includes NH₄F; and the second aqueous solvent is water or an aqueous solution containing an ion or an organic solvent.

In an embodiment, in a step three, a concentration of the organic carbon source solution ranges from 0.01 mol/L to 0.02 mol/L; and in step three, a temperature for the annealing treatment ranges from 700°C to 800°C, and an annealing time ranges from 7 h to 9 h.

A highly dispersed nano lithium manganese iron phosphate material having a uniform precursor morphology is prepared by a hydrothermal reaction, so that a nucleation time window can be reduced, the synthesized nano lithium manganese iron phosphate material is uniformly suspended and dispersed in a solution, and nucleation sites are increased, thereby obtaining a positive electrode composite material having excellent cladding performance of the first cladding layer and the second cladding layer.

### Example 1

### 1. Preparation of positive electrode composite material

Step 1: 27 g of FeSO₄.7H₂O, 17 g of MnSO₄.H₂O, and 8 g of Li₂CO₃ were added into a 200 mL beaker, 100 mL of deionized water and 20 mL of ethanol were added into the beaker, 6 mL of an aqueous solution of H₃PO₄ with a mass concentration of 85% was added into the beaker finally, stirring and dissolving were performed under an atmosphere of nitrogen for 10 min (minute) to obtain a first mixed solution, the first mixed solution was subjected to hydrothermal reaction at 90°C for 240 min to obtain nano lithium manganese iron phosphate material with a particle size D50 of 900 nm, and nano lithium manganese iron phosphate material was centrifuged, and dried and ground for later use;
Step 2: 5.6 g of NiSO₄.7H₂O, 0.43 g of MnSO₄.H₂O, 0.73 g of Co(NO₃)₂.6H₂O, 2g of Li₂CO₃ and 0.37 g of NH₄F were added into a 200 mL beaker, then 60 mL of deionized water and 20 mL of ethanol were added into the beaker, stirring and dissolving were performed for 10 min to obtain a second mixed solution; the nano lithium manganese iron phosphate material obtained in the step 1 was mixed with the second mixed solution, and ultrasonic dispersion was performed for 30 min to obtain a suspension liquid; the suspension liquid was subjected to hydrothermal reaction at 120°C for 360 min to obtain lithium manganese iron phosphate coated with nano ternary active material, a mole fraction of nickel in the ternary active material was 0.85, and a thickness of the first cladding layer composed of the ternary active material was 60 nm; and the lithium manganese iron phosphate coated with the ternary active material was centrifuged, dried and ground, and then annealed at 550°C for 12 h to obtain a nano composite material;
Step 3: the nano lithium manganese iron phosphate material with the first cladding layer obtained in the step 2 was soaked in a glucose solution of 0.01 mol/L for 30 min, and ultrasonically dispersed, the soaked nano composite material was taken out for centrifuging and drying, and then annealed under a 95vol% Ar + 5vol% H₂ atmosphere at 750°C for 8 h to obtain a positive electrode composite material having a specific surface area of 22.7 m²/g, and a thickness of a second cladding layer in the positive electrode composite material was 1.5 nm.

### 2.Preparation of positive electrode plate

The positive electrode composite material, conductive carbon black (super pll, SP), polyvinylidene fluoride (PVDF), and carbon nanotube (CNT) were mixed and stirred at a mass ratio of 96.5:0.9:2:0.6 with N-methylpyrrolidone (NMP) as a solvent, so as to obtain a positive electrode slurry. The positive electrode slurry was uniformly coated on a carbon-coated aluminum foil with a thickness of 12 µm, and then a drying process was performed at 90°C to obtain a dried positive electrode plate.

### 3. Preparation of the negative electrode plate

Artificial graphite, SP, carboxymethyl cellulose (CMC) and styrene-butadiene rubber (SBR) were mixed and stirred at a mass ratio of 95.5:2:0.5:2 with deionized water as a solvent, so as to obtain a negative electrode slurry. The negative electrode slurry was then coated on a copper foil with a thickness of 8 µm, and a vacuum drying process was performed on the electrode plate at 100°C.

### 4. Preparation of the lithium ion battery

### 4.1 Preparation of electrolyte solution

The electrolyte solution was prepared in a glove box filled with argon gas, and in the glove box, the water content was less than 10 ppm and the oxygen content was less than 1 ppm. The electrolyte solution was prepared through following steps: ethylene carbonate (EC), dimethyl carbonate (DMC) and diethyl carbonate (DEC) with a volume ratio of 30: 40: 30 were used to prepare the electrolyte solution including LiPF₆ and lithium bis(fluorosulfonyl)imide (LFSI) (LiPF₆:LFSI=1.1:0.1 (molar ratio)) which have a concentration of 1.2 mol/L, and then additive vinylene carbonate (VC) of 0.5wt%, fluoroethylene carbonate (FEC) of 1.5wt%, 0.5wt% of ethylene sulfate (DTD), and 0.5wt% of LiPO₂F₂ were added and mixed homogeneously for later use.

### 4.2 Assembly of Lithium ion battery

The vacuum-dried positive and negative electrode plates and the separator were punched and then assembled into a CR2032 button cell in a glove box filled with argon gas.

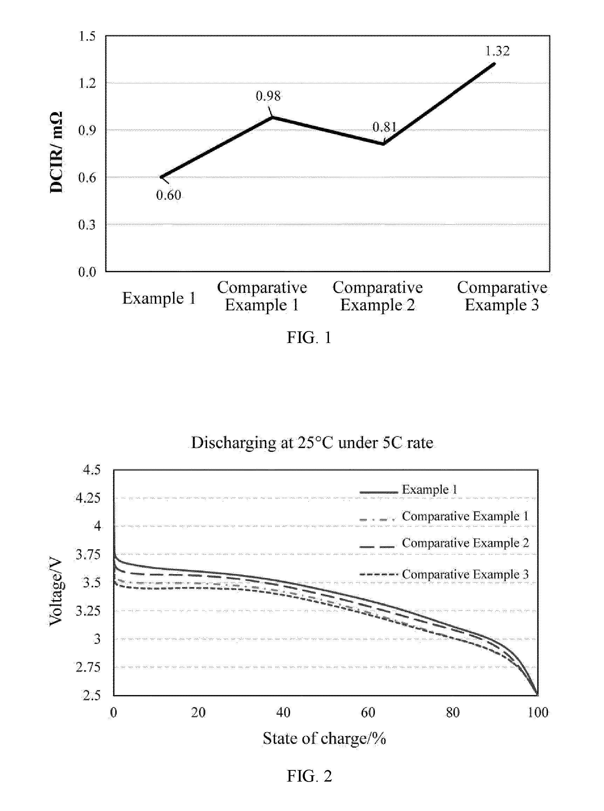

DCIR data of the lithium battery in the example is shown in FIG. 1. The discharging performance of the lithium battery in the example at 25°C under 5C rate is shown in FIG. 2.

### Example 2

### 1. Preparation of positive electrode composite material

Step 1: 25 g of FeSO₄.7H₂O, 18 g of MnSO₄.H₂O, and 6 g of Li₂CO₃ were added into a 200 mL beaker, 100 mL of deionized water and 20 mL of ethanol were added into the beaker, 10.5 mL of an aqueous solution of H₃PO₄ with a mass concentration of 60% was added into the beaker finally, stirring and dissolving were performed under an atmosphere of nitrogen for 10 min to obtain a first mixed solution, the first mixed solution was subjected to hydrothermal reaction at 95°C for 220 min to obtain nano lithium manganese iron phosphate material with a particle size D50 of 600 nm, and nano lithium manganese iron phosphate material was centrifuged, and dried and ground for later use;
Step 2: 5.6 g of NiSO₄.7H₂O, 0.43 g of MnSO₄.H₂O, 0.73 g of Co(NO₃)₂.6H₂O, 2g of Li₂CO₃ and 0.37 g of NH₄F were added into a 200 mL beaker, then 60 mL of deionized water and 20 mL of ethanol were added into the beaker, stirring and dissolving were performed for 10 min to obtain a second mixed solution; the nano lithium manganese iron phosphate material obtained in the step 1 was mixed with the second mixed solution, and ultrasonic dispersion was performed for 30 min to obtain a suspension liquid; the suspension liquid was subjected to hydrothermal reaction at 110°C for 380 min to obtain lithium manganese iron phosphate coated with nano ternary active material, a mole fraction of nickel in the ternary active material was 0.8, and a thickness of the first cladding layer composed of the ternary active material was 30 nm; and the lithium manganese iron phosphate coated with the ternary active material was centrifuged, dried and ground, and then annealed at 500°C for 14 h to obtain a nano composite material;
Step 3: the nano lithium manganese iron phosphate material with the first cladding layer obtained in the step 2 was soaked in a citric acid solution of 0.015 mol/L for 30 min, and ultrasonically dispersed, the soaked nano composite material was taken out for centrifuging and drying, and then annealed under a 95vol% Ar + 5vol% H₂ atmosphere at 700°C for 9 h to obtain a positive electrode composite material having a specific surface area of 20.5 m²/g, and a thickness of a second cladding layer in the positive electrode composite material was 1.2 nm.

### 2. Preparation of positive electrode plate

The preparation of the positive electrode plate was the same as in Example 1.

### 3. Preparation of the negative electrode plate

The preparation of the negative electrode plate was the same as in Example 1.

### 4. Preparation of the lithium ion battery

The preparation of the lithium ion battery was the same as that of the lithium battery in Example 1.

### Example 3

### 1.Preparation of positive electrode composite material

Step 1: 29 g of FeSO₄.7H₂O, 16 g of MnSO₄.H₂O, and 10 g of Li₂CO₃ were added into a 200 mL beaker, 100 mL of deionized water and 20 mL of ethanol were added into the beaker, 8.5 mL of an aqueous solution of H₃PO₄ with a mass concentration of 60% was added into the beaker finally, stirring and dissolving were performed under an atmosphere of nitrogen for 10 min to obtain a first mixed solution, the first mixed solution was subjected to hydrothermal reaction at 85°C for 260 min to obtain nano lithium manganese iron phosphate material with a particle size D50 of 1200 nm, and nano lithium manganese iron phosphate material was centrifuged, and dried and ground for later use;
Step 2: 5.6 g of NiSO₄.7H₂O, 0.43 g of MnSO₄.H₂O, 0.73 g of Co(NO₃)₂.6H₂O, 2g of Li₂CO₃ and 0.37 g of NH₄F were added into a 200 mL beaker, then 60 mL of deionized water and 20 mL of ethanol were added into the beaker, stirring and dissolving were performed for 10 min to obtain a second mixed solution; the nano lithium manganese iron phosphate material obtained in the step 1 was mixed with the second mixed solution, and ultrasonic dispersion was performed for 30 min to obtain a suspension liquid; the suspension liquid was subjected to hydrothermal reaction at 130°C for 340 min to obtain lithium manganese iron phosphate coated with nano ternary active material, a mole fraction of nickel in the ternary active material was 0.9, and a thickness of the first cladding layer composed of the ternary active material was 120 nm; and the lithium manganese iron phosphate coated with the ternary active material was centrifuged, dried and ground, and then annealed at 600°C for 10 h to obtain a nano composite material;
Step 3: the nano lithium manganese iron phosphate material with the first cladding layer obtained in the step 2 was soaked in a sucrose solution of 0.02 mol/L for 30 min, and ultrasonically dispersed, the soaked nano composite material was taken out for centrifuging and drying, and then annealed under a 95vol% Ar + 5vol% H₂ atmosphere at 800°C for 7 h to obtain a positive electrode composite material having a specific surface area of 24.8 m²/g, and a thickness of a second cladding layer in the positive electrode composite material was 1.5 nm.

### 2. Preparation of positive electrode plate

The preparation of the positive electrode plate was the same as in Example 1.

### 3. Preparation of the negative electrode plate

The preparation of the negative electrode plate was the same as in Example 1.

### 4. Preparation of lithium ion batteries

The preparation of the lithium ion battery was the same as that of the lithium battery in Example 1.

### Example 4

This example differs from Example 1 in that: the thickness of the first cladding layer in the positive electrode composite material is 1/25 of the particle size of the nano lithium manganese iron phosphate material; the thickness of the second cladding layer is 1/300 of the particle size of the nano lithium manganese iron phosphate material; and specifically, in steps 2 and 3, steps of preparing the positive electrode composite material using the nano lithium manganese iron phosphate are as follows:
Step 1: 27 g of FeSO₄.7H₂O, 17 g of MnSO₄.H₂O, and 8 g of Li₂CO₃ were added into a 200 mL beaker, 100 mL of deionized water and 20 mL of ethanol were added into the beaker, 6 mL of an aqueous solution of H₃PO₄ with a mass concentration of 85% was added into the beaker finally, stirring and dissolving were performed under an atmosphere of nitrogen for 10 min (minute) to obtain a first mixed solution, the first mixed solution was subjected to hydrothermal reaction at 90°C for 240 min to obtain nano lithium manganese iron phosphate material with a particle size D50 of 900 nm, and nano lithium manganese iron phosphate material was centrifuged, and dried and ground for later use;
Step 2: 5.6 g of NiSO₄.7H₂O, 0.43 g of MnSO₄.H₂O, 0.73 g of Co(NO₃)₂.6H₂O, 2g of Li₂CO₃ and 0.37 g of NH₄F were added into a 200 mL beaker, then 60 mL of deionized water and 20 mL of ethanol were added into the beaker, stirring and dissolving were performed for 10 min to obtain a second mixed solution; the nano lithium manganese iron phosphate material obtained in the step 1 was mixed with the second mixed solution, and ultrasonic dispersion was performed for 30 min to obtain a suspension liquid; the suspension liquid was subjected to hydrothermal reaction at 120°C for 160 min to obtain lithium manganese iron phosphate coated with nano ternary active material, a mole fraction of nickel in the ternary active material was 0.85, and a thickness of the first cladding layer composed of the ternary active material was 36 nm; and the lithium manganese iron phosphate coated with the ternary active material was centrifuged, dried and ground, and then annealed at 550°C for 12 h to obtain a nano composite material;
Step 3: the nano lithium manganese iron phosphate material with the first cladding layer obtained in the step 2 was soaked in a glucose solution of 0.01 mol/L for 120 min, and ultrasonically dispersed, the soaked nano composite material was taken out for centrifuging and drying, and then annealed under a 95vol% Ar + 5vol% H₂ atmosphere at 750°C for 12h to obtain a positive electrode composite material having a specific surface area of 34 m²/g, and a thickness of a second cladding layer in the positive electrode composite material was 3 nm.

The rest of the example is consistent with Example 1.

### Example 5

This example differs from Example 1 in that: the thickness of the first cladding layer in the positive electrode composite material is 1/5 of the particle size of the nano lithium manganese iron phosphate material; the thickness of the second cladding layer is 1/1000 of the particle size of the l nano lithium manganese iron phosphate material; and specifically, in steps 2 and 3, , steps of preparing the positive electrode composite material using the nano lithium manganese iron phosphate are as follows:
Step 1: 27 g of FeSO₄.7H₂O, 17 g of MnSO₄.H₂O, and 8 g of Li₂CO₃ were added into a 200 mL beaker, 100 mL of deionized water and 20 mL of ethanol were added into the beaker, 6 mL of an aqueous solution of H₃PO₄ with a mass concentration of 85% was added into the beaker finally, stirring and dissolving were performed under an atmosphere of nitrogen for 10 min (minute) to obtain a first mixed solution, the first mixed solution was subjected to hydrothermal reaction at 90°C for 240 min to obtain nano lithium manganese iron phosphate material with a particle size D50 of 900 nm, and nano lithium manganese iron phosphate material was centrifuged, and dried and ground for later use;
Step 2: 5.6 g of NiSO₄.7H₂O, 0.43 g of MnSO₄.H₂O, 0.73 g of Co(NO₃)₂.6H₂O, 2g of Li₂CO₃ and 0.37 g of NH₄F were added into a 200 mL beaker, then 60 mL of deionized water and 20 mL of ethanol were added into the beaker, stirring and dissolving were performed for 10 min to obtain a second mixed solution; the nano lithium manganese iron phosphate material obtained in the step 1 was mixed with the second mixed solution, and ultrasonic dispersion was performed for 30 min to obtain a suspension liquid; the suspension liquid was subjected to hydrothermal reaction at 120°C for 600 min to obtain lithium manganese iron phosphate coated with nano ternary active material, a mole fraction of nickel in the ternary active material was 0.85, and a thickness of the first cladding layer composed of the ternary active material was 180 nm; and the lithium manganese iron phosphate coated with the ternary active material was centrifuged, dried and ground, and then annealed at 550°C for 12 h to obtain a nano composite material;
Step 3: the nano lithium manganese iron phosphate material with the first cladding layer obtained in the step 2 was soaked in a glucose solution of 0.01 mol/L for 20 min, and ultrasonically dispersed, the soaked nano composite material was taken out for centrifuging and drying, and then annealed under a 95vol% Ar + 5vol% H₂ atmosphere at 750°C for 12h to obtain a positive electrode composite material having a specific surface area of 18 m²/g, and a thickness of a second cladding layer in the positive electrode composite material was 0.9 nm.

### Example 6

This example differs from Example 1 in that the nano lithium manganese iron phosphate material prepared in Step 1 has a particle size D50 of 400 nm, and specifically, the step of preparing the nano lithium manganese iron phosphate material in Step 1 is as follows:
Step 1: 27 g of FeSO₄.7H₂O, 17 g of MnSO₄.H₂O, and 8 g of Li₂CO₃ were added into a 200 mL beaker, 100 mL of deionized water and 20 mL of ethanol were added into the beaker, 6 mL of an aqueous solution of H₃PO₄ with a mass concentration of 85% was added into the beaker finally, stirring and dissolving were performed under an atmosphere of nitrogen for 10 min (minute) to obtain a first mixed solution, the first mixed solution was subjected to hydrothermal reaction at 90°C for 90 min to obtain nano lithium manganese iron phosphate material, and the nano lithium manganese iron phosphate material was centrifuged, and dried and ground for later use.

Finally, a positive electrode composite material having a specific surface area of 13 m²/g was prepared; and the rest of the example is consistent with Example 1.

### Example 7

This example differs from Example 1 in that the nano lithium manganese iron phosphate material prepared in Step 1 has a particle size D50 of 1500 nm. Specifically, the step of preparing the nano lithium manganese iron phosphate material in Step 1 is as follows:
Step 1: 27 g of FeSO₄.7H₂O, 17 g of MnSO₄.H₂O, and 8 g of Li₂CO₃ were added into a 200 mL beaker, 100 mL of deionized water and 20 mL of ethanol were added into the beaker, 6 mL of an aqueous solution of H₃PO₄ with a mass concentration of 85% was added into the beaker finally, stirring and dissolving were performed under an atmosphere of nitrogen for 10 min (minute) to obtain a first mixed solution, the first mixed solution was subjected to hydrothermal reaction at 90°C for 360 min to obtain nano lithium manganese iron phosphate material with a particle size D50 of 900 nm, and nano lithium manganese iron phosphate material was centrifuged, and dried and ground for later use.

Finally, a positive electrode composite material having a specific surface area of 10 m²/g was prepared; and the rest of the example is consistent with Example 1.

### Comparative Example 1

This comparative example differs from Example 1 in the preparation of the positive electrode composite material, which was prepared by the following steps:
Step 1: 27 g of FeSO₄.7H₂O, 17 g of MnSO₄.H₂O, and 8 g of Li₂CO₃ were added into a 200 mL beaker, 100 mL of deionized water and 20 mL of ethanol were added into the beaker, 6 mL of an aqueous solution of H₃PO₄ with a mass concentration of 85% was added into the beaker finally, stirring and dissolving were performed under an atmosphere of nitrogen for 10 min (minute) to obtain a first mixed solution, the first mixed solution was subjected to hydrothermal reaction at 90°C for 240 min to obtain nano lithium manganese iron phosphate material, and the nano lithium manganese iron phosphate material was centrifuged, and dried and ground for later use;
Step 2: 5.6 g of NiSO₄.7H₂O, 0.43 g of MnSO₄.H₂O, 0.73 g of Co(NO₃)₂.6H₂O, 2g of Li₂CO₃ and 0.37 g of NH₄F were added into a 200 mL beaker, then 60 mL of deionized water and 20 mL of ethanol were added into the beaker, stirring and dissolving were performed for 10 min to obtain a second mixed solution, and the second mixed solution was subjected to hydrothermal reaction at 120°C for 360 min to obtain a nano ternary active material;
Step 3: the nano lithium manganese iron phosphate material prepared in the step 1 was physically mixed with the nano ternary active material prepared in the step 2 to prepare the positive electrode composite material.

The rest of the comparative example is consistent with Example 1.

The DCIR data of the lithium battery in the comparative example is shown in FIG. 1. The discharging performance of the lithium battery in the comparative example at 25°C under 5C rate is shown in FIG. 2.

### Comparative Example 2

This comparative example differs from Example 1 in the preparation of the positive electrode composite material, the step 3 is omitted during the preparation of the positive electrode composite material, and the rest of the comparative example is consistent with Example 1.

The DCIR data of the lithium battery in the comparative example is shown in FIG. 1. The discharging performance of the lithium battery in the comparative example at 25°C under 5C rate is shown in FIG. 2.

### Comparative Example 3

This comparative example differs from Example 1 in the preparation of the positive electrode composite material, which was prepared by the following steps:
Step 1: 27 g of FeSO₄.7H₂O, 17 g of MnSO₄.H₂O, and 8 g of Li₂CO₃ were added into a 200 mL beaker, 100 mL of deionized water and 20 mL of ethanol were added into the beaker, 6 mL of an aqueous solution of H₃PO₄ with a mass concentration of 85% was added into the beaker finally, stirring and dissolving were performed under an atmosphere of nitrogen for 10 min (minute) to obtain a first mixed solution, the first mixed solution was subjected to hydrothermal reaction at 90°C for 240 min to obtain nano lithium manganese iron phosphate material with a particle size D50 of 900 nm, and the nano lithium manganese iron phosphate material was centrifuged, and dried and ground for later use;
Step 2: the nano lithium manganese iron phosphate material obtained in the step 1 was soaked in a glucose solution of 0.01 mol/L for 30 min, and ultrasonically dispersed, the soaked nano composite material was taken out for centrifuging and drying, and then annealed under a 95vol% Ar + 5vol% H₂ atmosphere at 750°C for 8 h to obtain a positive electrode composite material

The rest of the comparative example is consistent with Example 1.

The DCIR data of the lithium battery in the comparative example is shown in FIG. 1. The discharging performance of the lithium battery in the comparative example at 25°C under 5C rate is shown in FIG. 2.

### Testing method

### 1. DCIR Test

The DCIR test was carried out on the lithium ion batteries of Examples 1 to 7 and Comparative Examples 1 to 3, and the testing method was as follows: a capacity calibration was carried out on the lithium battery at 25°C under 1C, the state of charge capacity (SOC) was adjusted to 50%, then at SOC of 50%, all of the cells were discharged at 1C for 30 s (second), the discharging DCIR was calculated, and the test results are shown in FIG. 1.

### 2. Rate performance

The lithium ion batteries of Examples 1 to 7 and Comparative Examples 1 to 3 were subjected to a discharging test at 25°C under 5C rate, with a charge-discharge voltage in the range of 2.5 V-4.25 V, and specific test results are shown in FIG. 2.

### 3. Cycle Performance Test

The lithium-ion batteries of Examples 1 to 7 and Comparative Examples 1 to 3 were subjected to a cycle performance test, and a specific test method was as follows: after the lithium battery was put on hold at 25°C for 1 h, a cycle test was carried out with 3C step fast charge and 1C discharge, a charge-discharge voltage was in a range of 2.5 V-4.25 V, a capacity retention rate and a DCIR change rate were calculated, wherein DCIR increase rate=(DCIR for 500^{th} cycle - initial DCIR)×100%/initial DCIR, and capacity retention rate= discharge capacity for 500^{th} cycle×100%/initial discharge capacity; and the test results are shown in Table 1.

**Table 1**

| No. | Capacity retention rate after 500 cycles (%) | DCIR increase rate after 500 cycles (%) |
|---|---|---|
| Example 1 | 93.41 | 4.2 |
| Example 2 | 92.86 | 4.3 |
| Example 3 | 92.14 | 4.4 |
| Example 4 | 91.88 | 5.2 |
| Example 5 | 90.56 | 4.8 |
| Example 6 | 89.76 | 5.5 |
| Example 7 | 88.39 | 4.6 |
| Comparative Example 1 | 87.23 | 14.5 |
| Comparative Example 2 | 90.05 | 8.0 |
| Comparative Example 3 | 84.40 | 28.0 |

In combination with Examples 1-3, Comparative Examples 1-3, FIGs. 1-2, and Table 1, it can be seen that the discharge DCIR value in Example 1 was the lowest, only 0.6 mQ, while the discharge DCIR values in Comparative Examples 1-3 was increased by 63.3%, 35%, and 120%, respectively, compared to the discharge DCIR value in Example 1, and that the cyclic capacity retention rate in Example 1 was the highest and the DCIR increase rate was the lowest. It indicates that by using the nano lithium manganese iron phosphate material as the crystal nucleus, the ternary active material is grown at the nanometer level on the surface of the lithium manganese iron phosphate material, and then carbon coating treatment is performed to form a positive electrode composite material, which can greatly reduce the impedance of the material, improve the stability of the positive electrode plate, and sufficiently improve the power performance of the lithium battery. Excellent conductivity and stability are obtained.

With reference to Example 1, Examples 4 to 5, and Table 1, it can be seen that when the thicknesses of the first cladding layer and the second cladding layer are selected to be too large or too small, it is not conducive to the bonding stability between the carbon cladding layer, the first cladding layer, and the lithium manganese iron phosphate material, thereby negatively affecting the conductivity of the positive electrode composite material.

In combination with Example 1, Examples 6 to 7, and Table 1, it can be seen that when the particle size of the nano lithium manganese iron phosphate material is too high or too low, the specific surface area of the nano lithium manganese iron phosphate material is affected, which is not conducive to the formation of the first cladding layer with a suitable thickness on the surface of the lithium manganese iron phosphate material through the nano ternary active material, but also affects the further cladding of the second cladding layer, thereby not conducive to the formation of the positive electrode composite material with a suitable specific surface area. When the specific surface area of the positive electrode composite material is too small, the battery is high in battery internal resistance, low in discharge platform, low in capacity, poor in rate performance, and poor in cycle performance after the positive electrode composite material is applied in the positive electrode plate. When the specific surface area of the positive electrode composite material is too large, the positive electrode composite material is high in activity, easy to agglomerate, difficult to disperse, and difficult to process.

## Claims

1. A positive electrode composite material, **characterized by** comprising a nano lithium manganese iron phosphate material, a first cladding layer coated on a surface of the nano lithium manganese iron phosphate material, and a second cladding layer coated on a surface of the first cladding layer; wherein the first cladding layer comprises a nano ternary active material, and the second cladding layer is a carbon cladding layer.

2. The positive electrode composite material according to claim 1, **characterized in that** a thickness of the first cladding layer ranges from 1/20 to 1/10 of a particle size D50 of the nano lithium manganese iron phosphate material.

3. The positive electrode composite material according to claim 1, **characterized in that** a thickness of the second cladding layer ranges from 1/800 to 1/500 of a particle size D50 of the nano lithium manganese iron phosphate material.

4. The positive electrode composite material according to any one of claims 1 to 3, **characterized in that** a particle size D50 of the nano lithium manganese iron phosphate material ranges from 600 nm to 1200 nm.

5. The positive electrode composite material according to any one of claims 1 to 4, **characterized in that** the nano ternary active material is a high-nickel nano ternary active material, and a mole fraction of nickel in the high-nickel nano ternary active material ranges from 0.8 to 0.9.

6. The positive electrode composite material according to any one of claims 1 to 5, **characterized in that** the carbon cladding layer comprises a carbon material selected from an organic carbon source, the organic carbon source is selected from at least one of glucose, sucrose, soluble starch, citric acid, β-cyclodextrin, or polyvinyl alcohol.

7. The positive electrode composite material according to any one of claims 1 to 6, **characterized in that** a specific surface area of the positive electrode composite material ranges from 20 m²/g to 25 m²/g.

8. A method of preparing the positive electrode, **characterized by** composite material according to any one of claims 1 to 7, comprising steps of:
Step 1: adding an iron source, a first manganese source, and a first lithium source to a first aqueous solvent in a stirring state to form a first mixture, then adding a phosphorus source to the first mixture, and after stirring and dissolving, performing a hydrothermal reaction to obtain a nano lithium manganese iron phosphate material;
Step 2: mixing a nickel source, a second manganese source, a cobalt source, a second lithium source, and an ammonium salt with a second aqueous solvent, forming a second mixture after stirring and dissolving, mixing the second mixture with the nano lithium manganese iron phosphate material, and performing an annealing treatment after a hydrothermal reaction of the second mixture to form a first cladding layer on a surface of the nano lithium manganese iron phosphate material;
Step 3: mixing the nano lithium manganese iron phosphate material on the surface of which the first cladding layer are formed obtained in Step 2 with an organic carbon source solution, taking the nano lithium manganese iron phosphate material out, and performing an annealing treatment after a drying treatment to obtain the positive electrode composite material.

9. The method according to claim 8, **characterized in that** in the step 1, a mass ratio of the iron source, the first manganese source, the first lithium source, and the phosphorus source is 25-29:16-18:6-10:10-15; and in the step 1, temperature for the hydrothermal reaction ranges from 85°C to 95°C, and time for the hydrothermal reaction ranges from 220 min to 260 min.

10. The method according to claim 8, **characterized in that** in the step 1, the iron source comprises at least one of FeSO₄, FeCl₂, FeC₂O₄.2H₂O, Fe(OH)₃, or Fe(NO₃)₃; the first manganese source comprises at least one of MnSO₄, MnCO₃, or MnCl₂; the first lithium source comprises at least one of Li₂CO₃, LiOH, or LiCl; the phosphorus source comprises at least one of H₃PO₄, H₃PO₃, or LiH₂PO₄; and the first aqueous solvent is water or an aqueous solution containing an ion or an organic solvent.

11. The method according to claim 8, **characterized in that** in the step 2, a mass ratio of the nickel source, the second manganese source, the cobalt source, the second lithium source, and the ammonium salt is 450-650:20-60:40-100:150-260:20-50; in the step 2, temperature for the hydrothermal reaction ranges from 110°C to 130°C, and time for the hydrothermal reaction ranges from 340 min to 380 min; and in the step 2, temperature for the annealing treatment ranges from 500°C to 600°C, and time for the annealing treatment ranges from 10 h to 14 h.

12. The method according to claim 8, **characterized in that** in the step 2, the nickel source comprises at least one of NiSO₄, Ni(OH)₂, or Ni(NO₃)₂; the second manganese source comprises at least one of MnSO₄, MnCO₃, or MnCl₂; the cobalt source comprises at least one of Co(NO₃)₂, CoSO₄, or CoCl₂; the second lithium source comprises at least one of Li₂CO₃, LiOH, or LiCl; the ammonium salt comprises NH₄F; and the second aqueous solvent is water or an aqueous solution containing an ion or an organic solvent.

13. The method according to claim 8, **characterized in that** in the step 3, a concentration of the organic carbon source solution ranges from 0.01 mol/L to 0.02 mol/L; and in step 3, temperature for the annealing treatment ranges from 700°C to 800°C, and time for the annealing treatment ranges from 7 h to 9 h.

14. A positive electrode plate, **characterized in that** the positive electrode plate comprises a positive current collector and a positive electrode material layer disposed on a surface of the positive current collector, the positive electrode material layer comprises a conductive agent, a binder, and the positive electrode composite material according to any one of claims 1 to 7.

15. A lithium ion battery, **characterized by** comprising the positive electrode plate according to claim 14.
